# EUROPÄISCHE PATENTSCHRIFT

(11) **EP 2 603 950 B1**
(45) Veröffentlichungstag und Bekanntmachung des Hinweises auf die Patenterteilung: **13.01.2016**
(21) Anmeldenummer: 11739089.8
(22) Anmeldetag: 04.08.2011
(51) Int. Cl.: H01Q 1/12, H01Q 1/32

(54) **SCHEIBE MIT ANTENNE**
WINDOW PANE HAVING AN ANTENNA
VITRE ÉQUIPÉE D'UNE ANTENNE

(30) Priorität: 11.08.2010 EP 10172490
(43) Veröffentlichungstag der Anmeldung: 19.06.2013
(73) Patentinhaber: Saint-Gobain Glass France, 92400 Courbevoie (FR)
(72) Erfinder: ALTES, Jens, 52074 Aachen (DE); KÖTTE, Rolf, 52477 Alsdorf (DE); LABROT, Michael, 52072 Aachen (DE)
(74) Vertreter: Gebauer, Dieter Edmund
(86) Internationale Anmeldenummer: PCT/EP2011/063481
(87) Internationale Veröffentlichungsnummer: WO 2012/019964

(56) Entgegenhaltungen:
- WO-A1-2004/086556
- DE-A1-102004 011 662
- DE-A1-102006 056 501
- DE-C1- 4 311 442
- DE-U1- 20 218 215
- JP-A- 2004 166 202

## Beschreibung

Die Erfindung betrifft eine Verbundscheibe mit einer Antennenhalterung, ein Verfahren zu deren Herstellung und Verwendung.

Moderne Kraftfahrzeuge sind in der Regel mit verschiedenen Antennen zum Empfangen und auch zum Senden elektromagnetischer Signale ausgestattet. Neben vollständig ins Glas integrierten Antennen werden auch weiterhin vom Fahrzeug abstehende Antennen am Fahrzeug montiert. Häufig finden sich Antennen, sogenannte "Haifischflossen" auch im hinteren Dachbereich. Im Zuge immer strengerer Umweltschutzvorgaben gibt es eine zunehmende Tendenz zur Gewichtseinsparung im Automobilbau. Neben der Verwendung von Verbundwerkstoffen werden auch aus optischen und Designgründen mehr und mehr Glasscheiben verwendet. Wenn Antennen auf Glasdächern angebracht werden, ist dieses in vielen Fällen nur auf Einscheibensicherheitsglas (ESG) möglich. Aus Stabilitätsgründen und auf Grund der Sicherheit sind jedoch häufig Autodachscheiben aus Verbundsicherheitsglas (VSG) wünschenswert. Dies macht häufig eine Zweiteilung des Daches notwendig. Der größere Teil des Autodaches umfasst Verbundsicherheitsglas (VSG), der Antennenbereich im Gegensatz dazu Einscheibensicherheitsglas (ESG). Verbesserte Herstellungsverfahren erlauben den Einbau von zunehmend größeren und stabileren Glasscheiben in Seiten-, Heck- und vor allem Dachscheibenfenstern. Analog zu Karosserieteilen aus Stahl, wie beispielsweise Autodächern, müssen auch bei Bauteilen aus Glas Befestigungen angebracht werden. Insbesondere bei Ganzglas- oder Panoramadächern können oder müssen Elemente der Antenne auf der Glasfläche befestigt werden. Aufgrund der auf das Glasdach und auf die Antenne einwirkenden Flieh- und Strömungskräfte wird die Antenne häufig durch eine Verschraubung im Glaskörper gesichert. Die Verschraubung der Antenne auf dem Glaskörper ermöglicht und erleichtert zudem auch den Austausch von defekten Antennenteilen. Die Verschraubung von Antennen mit dem Glaskörper erlaubt des Weiteren die platzsparende Lagerung von Dachscheiben für verschiedene Antennensysteme. In diesen Fällen lassen sich die eigentlichen Antennen einfach in der Endmontage anbringen, während gleichzeitig die mit Schraubhalterungen vorbereiteten Glasscheiben nebeneinander platzsparend gelagert werden können.

DE 10 2007 012 486 A1 offenbart ein Fahrzeugdach mit einem Glasfestelement, das eine von einem Halterahmen umgebene Scheibe sowie ein mit dem Glasfestelement verbundenes Antennenelement aufweist.

DE 3410950 A1 offenbart eine Antennenanordnung für Kraftfahrzeuge. Ein Antennenstab ist über ein auf der Scheibe befestigtes Fußteil mit einem auf der Rückseite der Scheibe befestigten Gegenstück verbunden. Das Gegenstück und das Fußstück bilden zusammen einen Koppelkondensator.

DE 10 2004 011 662 A1 offenbart eine Fahrzeug-Antennenbefestigungsanordnung. Das Fahrzeugteil weist an seiner Oberseite eine elektrisch isolierende Schicht und darunter eine Massefläche auf.

WO 2004/086556 A1 offenbart eine Antennenbefestigungsvorrichtung an Karosserieelementen oder Glasdächern von Fahrzeugen.

DE 10 2006 056 501 A1 offenbart eine Verbundglasscheibe mit einer in ein Durchgangsloch eingesetzten Befestigungseinrichtung für Gegenstände, beispielsweise Antennen.

Aufgrund der mechanischen Eigenschaften von Scheiben ist die Realisierung einer widerstandsfähigen und stabilen Befestigung von Vorrichtungen oder Gegenständen wie Antennen an Verbundglasscheiben schwierig. Unsachgemäße Arbeiten, insbesondere bei Verschraubungen, können leicht zu einer Beschädigung oder zu einem vollständigen Zerbrechen der Scheibe führen. Die Montage der Verschraubung und des Antennenanschlusses macht dabei Bohrungen im Glas notwendig. Insbesondere der an die Bohrung angrenzende Bereich des Glases ist aufgrund der geringen Flexibilität von glasartigen Werkstoffen in der Regel sehr anfällig für mechanische Kräfte oder Belastungen. Werden im Bereich der Bohrung die auf das Glas wirkenden Kräfte ungleichmäßig abgegeben, so kann die Scheibe leicht brechen.

Die Erfindung hat die Aufgabe, eine Fahrzeugscheibe mit Antenne bereitzustellen, welche eine hohe Stabilität der Fahrzeugscheibe bei Einbau der Antenne und im weiteren Betrieb gewährleistet.

Die Aufgabe der vorliegenden Erfindung wird erfindungsgemäß durch eine Fahrzeugscheibe mit Antennenhalterung gemäß Anspruch 1 gelöst. Bevorzugte Ausführungen gehen aus den Unteransprüchen hervor.

Ein erfindungsgemäßes Verfahren zur Herstellung eines Fahrzeugfensters und dessen Verwendung gehen aus weiteren nebengeordneten Ansprüchen hervor.

Die erfindungsgemäße Fahrzeugscheibe mit Antennen umfasst eine Öffnung in einer Verbundscheibe aus einer äußeren Scheibe, Zwischenschicht und inneren Scheibe. Der Ausdruck "innere Scheibe" bezeichnet die im Fahrzeuginnenraum befindliche Scheibe, der Ausdruck "äußere Scheibe" bezeichnet die nach außen liegende Scheibe. Die äußere Scheibe und/oder innere Scheibe weisen bevorzugt eine Dicke von 1 mm bis 4 mm, besonders bevorzugt 1,4 mm bis 2,5 mm auf. Die äußere Scheibe und die innere Scheibe können unterschiedliche Dicken aufweisen. Die Zwischenschicht enthält bevorzugt PVB (Polyvinylbutyral), PET (Polyethylenterephthalat), PVC (Polyvinylchlorid), PU (Polyurethan), EVA (Poly-Ethylvinylacetat) und Mischungen sowie Copolymere davon. Die Zwischenschicht weist bevorzugt eine Dicke von 0,30 mm bis 0,9 mm, bevorzugt 0,50 mm bis 0,80 mm auf. Die Verbundscheibe weist zwei übereinanderliegende Bohrungen auf. Der Durchmesser der Bohrung in der inneren Scheibe ist bevorzugt größer als der Durchmesser der Bohrung in der äußeren Scheibe und bildet so eine Aussparung in der inneren Scheibe. Eine genaue Beschreibung der zwei übereinanderliegenden Bohrungen ist auch in der DE 10 2006 056501 A1 offenbart. Auf der gegenüberliegenden Seite der Verbundscheibe ist oberhalb der Öffnung der äußeren Scheibe ein Klebstoff angeordnet. Der Klebstoff ist bevorzugt weiter ausgedehnt als die Öffnung der inneren Scheibe. Im Gegensatz zu der in DE 10 2006 056501 A1 in Figur 1 und Figur 2 gezeigten Anordnung nach dem Stand der Technik wird bei einer Belastung im Bereich der Öffnung über den Klebstoff die anliegende Kraft in den Verbund aus äußerer Scheibe, Zwischenschicht und innerer Scheibe geleitet. Die äußere Scheibe wird weniger belastet und bricht nicht oder weniger leicht. Die Klebung bewirkt eine großflächige und homogene Krafteinwirkung auf den Scheibenverbund.

Oberhalb des Klebstoffs sind eine Montageplatte fest und ein auf der Montageplatte angeordnetes, reversibel abnehmbar oder befestigtes, Antennengehäuse angebracht. Der Ausdruck "Antennengehäuse" umfasst im Sinne der Erfindung auch die eigentliche Antenne, Verkabelung und gegebenenfalls Steuerelektronik. Eine stabförmige Antennenhalterung ist bevorzugt mit einem Schraubgewinde versehen und unterhalb des eigentlichen Antennengehäuses fest angeordnet. Der Ausdruck "stabförmig" umfasst im Sinne der Erfindung sowohl zylinderförmige als auch quaderförmige Körper oder Körper mit einer polygonen Grundfläche. Ein Clips oder eine Mutter an der Antennenhalterung fixieren innerhalb oder unterhalb der Aussparung das Antennengehäuse an der Montageplatte. Die Montageplatte wird über den Klebstoff auf der Verbundscheibe fixiert. Wird der Clips oder die Mutter unterhalb der inneren Scheibe von der Antennenhalterung gelöst, so lässt sich das Antennengehäuse oberhalb der Montageplatte leicht und reversibel entnehmen. Die Austauschbarkeit der Antenne im Bereich der Antennenhalterung ist eine weitere wichtige Aufgabenstellung.

Unterhalb der Öffnung ist bevorzugt ein Dichtring und eine Stützscheibe oder eine Unterlegscheibe angeordnet. Im Sinne der Erfindung bezieht sich der Ausdruck "unterhalb der Öffnung der Scheibe" auf die dem Antennengehäuse abgewandte Seite der Verbundscheibe.

Der Dichtring und die Stützscheibe sind bevorzugt in der Öffnung innerhalb der inneren Scheibe angeordnet.

Der Dichtring und die Stützscheibe sind bevorzugt in der Aussparung angeordnet.

Der Klebstoff ist bevorzugt von einem äußeren Dichtring umgeben. Der äußere Dichtring versiegelt die Klebung nach außen und verhindert das Eindringen von Feuchtigkeit und Schmutz.

Die Öffnung weist bevorzugt einen Durchmesser von 0,5 cm bis 5 cm, besonders bevorzugt von 1 cm bis 2 cm auf. Die Öffnung ist bevorzugt kreisförmig ausgebildet.

Die Scheibe umfasst oder enthält bevorzugt Flachglas (Floatglas), Quarzglas, Borosilikatglas, Kalk-Natron-Glas oder Polymere, bevorzugt Polyethylen, Polypropylen, Polycarbonat Polymethylmethacrylat und/oder Gemische davon. Die Scheiben weisen bevorzugt eine mittlere Lichttransmission (wenn nicht anders spezifiziert als Lichttransmission für die Lichtart A und einem 2° - Normalbeobachter nach DIN 5033 für Licht der Wellenlängen von 380 nm bis 780 nm) von mehr als 80 %, bevorzugt mehr als 90 % auf. Alternativ sind auch getönte oder abgedunkelte Scheiben mit verminderter Transmission, so genannte Sonnendächer, möglich.

Der Klebstoff enthält bevorzugt Klebstoffe, feuchtigkeitsreaktive Schmelzklebstoffe, Klebstoffe oder heißhärtenden Klebstoff, bevorzugt Polyurethan-Präpolymere, Polyester, Polyolefine, Polyurethane, Silikone, Polyacrylate, Polyvinylacetate, Polyepoxide und/oder Polyamide sowie Gemische und/oder Copolymere davon, besonders bevorzugt Polyurethane.

Die Montageplatte und/oder Stützscheibe enthalten bevorzugt Metall und/oder Polymere, bevorzugt Eisen, Mangan, Chrom, Nickel, Kobalt, Aluminium, Vanadium, Wolfram, Titan oder Legierungen davon und/oder Polyethylen, Polypropylen, Polystyrol, Polyurethane, Polycarbonate, Polymethylmetacrylate, Polyacrylate, Polyester, Polyamide, Polyethylenterephthalat, Polybutylenterephthalat und/oder Gemische oder Copolymere davon.

Die Antennenhalterung, Clipse und/oder Mutter enthalten bevorzugt Metall und/oder Polymere, bevorzugt Eisen, Mangan, Chrom, Nickel, Kobalt, Aluminium, Vanadium, Wolfram, Titan oder Legierungen davon und/oder Polyethylen, Polypropylen, Polystyrol, Polyurethane, Polycarbonate, Polymethylmetacrylate, Polyacrylate, Polyester, Polyamide, Polyethylenterephthalat, Polybutylenterephthalat und/oder Gemische oder Copolymere davon.

Die Erfindung umfasst des Weiteren ein Verfahren zur Herstellung einer Fahrzeugscheibe mit Antenne. In die Scheibe aus Verbundglas wird in einem ersten Schritt eine Öffnung in eine äußere Scheibe und innere Scheibe gebohrt und/oder geschnitten. Dieser Schritt kann bevorzugt auch vor dem Biegen und Laminieren der inneren und äußeren Scheibe erfolgen. Vor dem eigentlichen Biegeprozess der Verbundscheibe werden hierzu in die äußere Scheibe und innere Scheibe übereinanderliegend Löcher (Öffnung) gebohrt. Das Loch in der inneren Scheibe ist bevorzugt größer als das Loch in der äußeren Scheibe und ergibt auf diese Art und Weise eine Aussparung der Verbundscheibe auf der Seite der inneren Scheibe. Die Funktionsweise der Aussparung, d.h. der kleinere Lochdurchmesser der äußeren Scheibe ist auch in der DE 10 2006 056501 A1 in [0012] bis [0017] beschrieben. Im Biegeprozess bilden sich Randspannungen im Lochbereich, welche eine zusätzliche Stabilität erzeugen. Oberhalb der äußeren Scheibe der Verbundscheibe wird anschließend um die komplette Öffnung herum ein Klebstoff aufgebracht. Der Ausdruck "äußeren" bezieht sich auf die nach außen gewandte Seite der im Fahrzeug verbauten Scheibe, der Ausdruck "inneren" bezieht sich auf die nach innen gewandte Seite der im Fahrzeug verbauten Scheibe. In einem nächsten Schritt wird eine Montageplatte auf dem Klebstoff aufgebracht. Anschließend wird eine Anordnung aus Antennengehäuse mit einer am Antennengehäuse befestigten Antennenhalterung auf der Montageplatte aufgebracht und dabei die Antennenhalterung durch die Öffnung geführt. Anschließend wird das Antennengehäuse mit einer Mutter oder Clips an der inneren Scheibe, bevorzugt in der Aussparung, fixiert. Der Ausdruck "Antennengehäuse" umfasst im Sinne der Erfindung auch die eigentliche Antenne, Verkabelung und gegebenenfalls Steuerelektronik. Die Antennenhalterung kann in dieser Ausführung auch als elektrischer Leiter funktionieren. In einem abschließenden Schritt können die weiteren elektrischen Anschlüsse und/oder Steuerelemente angebracht werden.

Die Erfindung umfasst des Weiteren ein alternatives Verfahren zur Herstellung einer Fahrzeugscheibe mit Antennenhalterung. In die Scheibe aus Verbundglas wird wie oben beschrieben eine Öffnung in eine äußere Scheibe und innere Scheibe gebohrt und/oder geschnitten. Im folgenden Schritt wird ein Klebstoff auf einer Montageplatte aufgebracht. Die Montageplatte wird anschließend mit der klebstofftragenden Seite oberhalb der Öffnung auf der äußeren Scheibe aufgebracht. Der Klebstoff wird im nächsten Schritt zwischen die Montageplatte und die äußere Scheibe gefügt. In einem nächsten Schritt wird eine Anordnung aus Antennengehäuse mit einer am Antennengehäuse befestigten Antennenhalterung auf der Montageplatte aufgebracht und dabei die Antennenhalterung durch die Öffnung geführt. Anschließend wird das Antennengehäuse mit einer Mutter oder Clips an der inneren Scheibe, bevorzugt in der Aussparung, fixiert. Der Ausdruck "Antennengehäuse" umfasst im Sinne der Erfindung auch die eigentliche Antenne, Verkabelung und gegebenenfalls Steuerelektronik. Die Antennenhalterung kann in dieser Ausführung auch als elektrischer Leiter funktionieren. In einem abschließenden Schritt können die weiteren elektrischen Anschlüsse und/oder Steuerelemente angebracht werden.

Die Aussparung ist bevorzugt so dimensioniert, dass die Stützscheibe in die Aussparung eingepasst werden kann.

Der Zwischenraum zwischen der äußeren Stützscheibe, dem Klebestreifen und der Verbundscheibe wird bevorzugt mit einem Dichtring abgeschlossen. Der Dichtring verhindert das Eindringen von Luft und Feuchtigkeit.

Die Erfindung umfasst des Weiteren die Verwendung der Fahrzeugscheibe als Dachscheibe eines Fahrzeuges.

Im Folgenden wird die Erfindung anhand einer Zeichnung näher erläutert. Die Zeichnung ist eine rein schematische Darstellung und nicht maßstabsgetreu. Die Zeichnung schränkt die Erfindung in keiner Weise ein.

Es zeigen:
Figur 1 eine schematische Ansicht einer Fahrzeugscheibe mit Antennenhalterung nach dem Stand der Technik,
Figur 2 eine schematische Ansicht einer erfindungsgemäßen Fahrzeugscheibe mit Antennenhalterung,
Figur 3 eine schematische Ansicht einer weiteren Ausführungsform der erfindungsgemäßen Fahrzeugscheibe mit Antennenhalterung und
Figur 4 ein Fließdiagramm des erfindungsgemäßen Verfahrens.

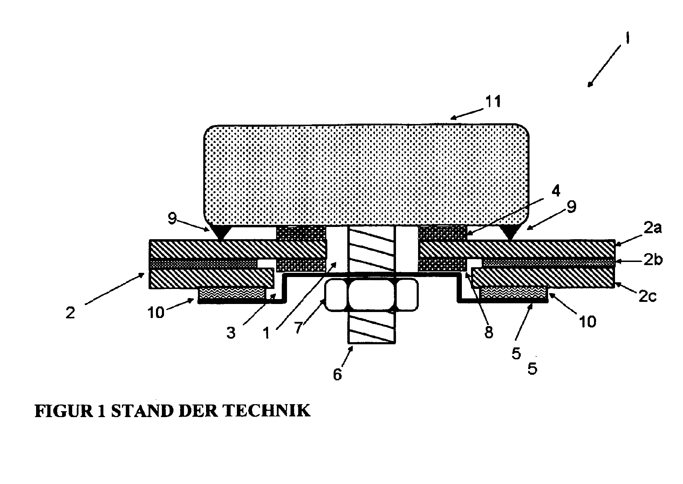

Figur 1 zeigt eine schematische Ansicht einer Fahrzeugscheibe (I) mit Antenne nach dem Stand der Technik. Die Verbundscheibe (2) umfasst eine äußere Scheibe (2a), Zwischenschicht (2b) und innere Scheibe (2c). Der Ausdruck "innere Scheibe" bezeichnet die im Fahrzeuginnenraum befindliche Scheibe, der Ausdruck "äußere Scheibe" bezeichnet die nach außen liegende Scheibe. Auf einer Stützscheibe (5) ist innerhalb der Öffnung (1) und einer Aussparung (3) der inneren Scheibe (2c) ein Dichtring (8) angeordnet. Zwischen dem Dichtring (8) und einem weiteren Dichtring (4) befindet sich der an die Öffnung (1) angrenzende Teil der äußeren Scheibe (2a). Über einem weiteren Dichtring (9) ist das Antennengehäuse (11) angeordnet. Eine Schraube (6) mit einer Mutter (7) sowie ein umliegender Klebstoff (10) zwischen der Stützscheibe (5) und innerer Scheibe (2c) fixieren die Montageplatte (12) über der Öffnung (1) der Scheibe (2). Die Antennenhalterung (6) kann auch als elektrischer Anschluss dienen und die im Antennengehäuse angeordnete Elektrik mit Strom versorgen. Versuche mit einer Last im Bereich der Öffnung (1) führen zum Glasbruch der äußeren Scheibe (2a). Insbesondere bei einer starken seitlichen Belastung wird die wirkende Kraft durch die Dichtringe (4, 8) auf das Außenglas (2a) übertragen, welches der Belastung nicht standhält und bricht.

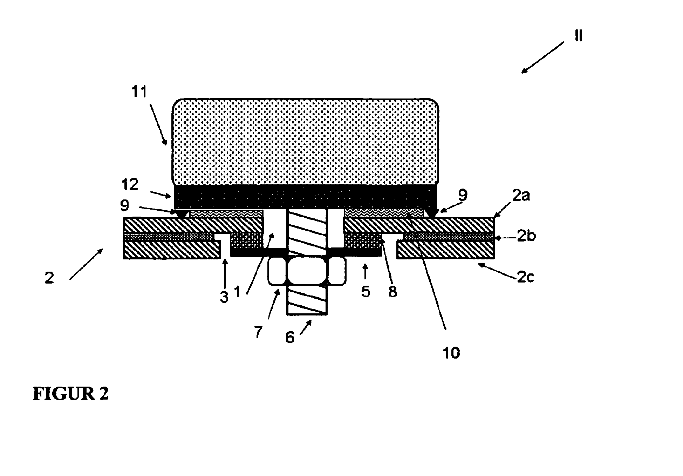

Figur 2 zeigt eine schematische Ansicht einer erfindungsgemäßen Fahrzeugscheibe (II). Die Verbundscheibe (2) umfasst wie in Figur 1 eine äußere Scheibe (2a), Zwischenschicht (2b) und innere Scheibe (2c). Der Ausdruck "innere Scheibe" bezeichnet die im Fahrzeuginnenraum befindliche Scheibe, der Ausdruck "äußere Scheibe" bezeichnet die nach außen liegende Scheibe. Auf einer Stützscheibe (5) ist innerhalb der Öffnung (1) und einer Aussparung (3) der inneren Scheibe (2c) ein Dichtring (8) angeordnet. Auf dem Dichtring (8) befindet sich der an die Öffnung (1) angrenzende Teil der äußeren Scheibe (2a). Auf der dem Dichtring abgewandten Seite verbindet ein Klebstoff (10) die Montageplatte (12) mit der äußeren Scheibe (2a). Eine vom Antennengehäuse (11) abstehende und mit diesem fest verbundene Antennenhalterung (6) mit einer Mutter (7), Stützscheibe (5) und der Montageplatte (12) fixieren das Antennengehäuse (11) über der Öffnung (1) an der Verbundscheibe (2). Der Einsatz der Montageplatte (12) erlaubt zudem das Auswechseln einer defekten Antenne oder des Antennengehäuses (11) ohne den Klebstoff (10) zu lösen. Über einem weiteren Dichtring (9) ist der Klebstoff (10) vor Staub und Feuchtigkeit geschützt. Im Gegensatz zu der in Figur 1 gezeigten Anordnung (I) nach dem Stand der Technik wird bei einer Belastung im Bereich der Öffnung (1) die anliegende Kraft in den Verbund aus äußerer Scheibe (2a), Zwischenschicht (2b) und innerer Scheibe (2c) geleitet. Die äußere Scheibe (2a) wird weniger belastet und bricht nicht. Versuche zeigten eine deutlich höhere Bruchsicherheit der in Figur 2 gezeigten erfindungsgemäßen Ausführung im Vergleich zu der Ausführung nach dem Stand der Technik in Figur 1.

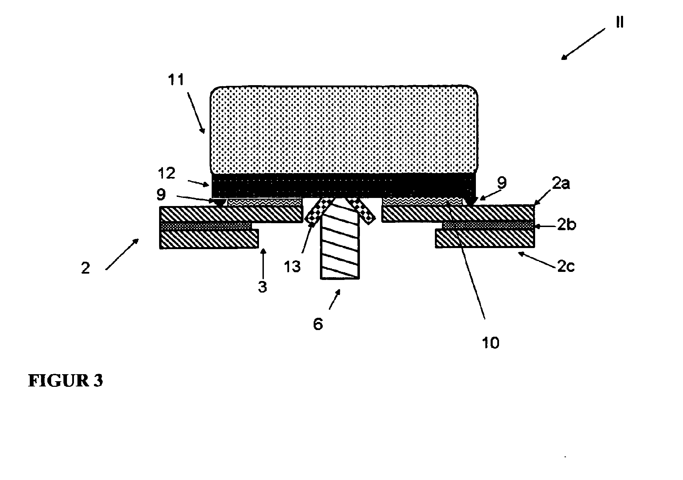

Figur 3 zeigt eine schematische Ansicht einer weiteren Ausführungsform der erfindungsgemäßen Fahrzeugscheibe (II). Die Verbundscheibe (2) umfasst wie in Figur 2 eine äußere Scheibe (2a), Zwischenschicht (2b) und innere Scheibe (2c). Benachbart zur Öffnung (1) in der äußeren Scheibe (2a) verbindet ein Klebstoff (10) eine Montageplatte (12) mit der äußeren Scheibe (2a). Ein oder mehrere Clips (13) fixieren die Anordnung aus Montageplatte (12) und einen Antennengehäuse (11) über der Öffnung (1) der äußeren Scheibe (2a) der Verbundscheibe (2). Der Einsatz der Montageplatte (12) mit einem Clips (13) erlaubt das schnelle Auswechseln einer defekten Antenne oder des Antennengehäuses (11) ohne den Klebstoff (10) zu lösen. Über einem weiteren Dichtring (9) ist der Klebstoff (10) vor Staub und Feuchtigkeit geschützt. Wird der Clips (13) unterhalb der inneren Scheibe (2c) gelöst, so lässt sich das Antennegehäuse oberhalb der Montageplatte (12) leicht entnehmen.

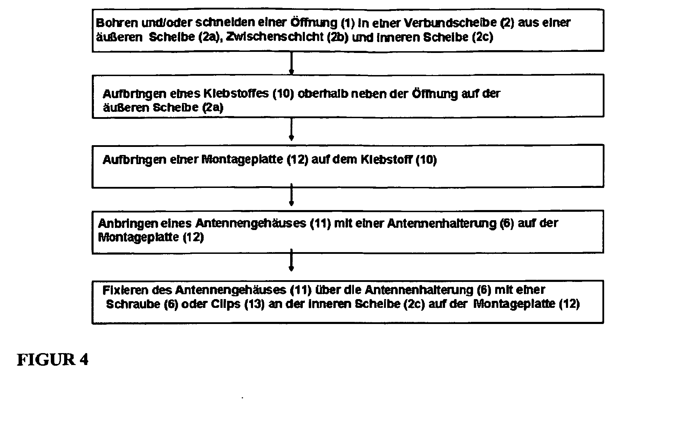

Figur 4 zeigt ein Fließdiagramm des erfindungsgemäßen Verfahrens. In eine Verbundscheibe (2) aus einer äußeren Scheibe (2a), Zwischenschicht (2b) und inneren Scheibe (2c) wird in einem ersten Schritt eine Öffnung (1) gebohrt und/oder geschnitten. Auf der äußeren Scheibe (2a) wird oberhalb und neben der Öffnung (1) eine Montageplatte mit Hilfe eines Klebstoffes (10) befestigt. Die Aushärtung des Klebstoffes (10) kann in Abhängigkeit vom verwendeten Klebstoffsystem durch Feuchtigkeit, Wärme, Luftsauerstoff oder UV-Licht erfolgen. Mit dieser Konfiguration kann nun ein optimierter Transport erfolgen sowie anschließend die Montage der übrigen, deutlich mehr Platz beanspruchenden Teile erfolgen. In einem nächsten Schritt wird eine Anordnung aus Antennengehäuse (11) mit einer am Antennengehäuse (11) befestigten Antennenhalterung (6) auf der Montageplatte (12) aufgebracht und dabei die Antennenhalterung (6) durch die Öffnung (6) geführt. Anschließend wird das Antennengehäuse (11) mit einer Mutter (7) oder Clips (13) an der inneren Scheibe (2c) unterhalb oder in der Aussparung (3) fixiert. In einem abschließenden Schritt können weitere elektrische Anschlüsse angebracht werden.

### Bezugszeichenliste

(1) Öffnung
(2) Scheibe,
(2a) äußere Scheibe,
(2b) Zwischenschicht,
(2c) innere Scheibe,
(3) Aussparung,
(4) Dichtring,
(5) Stützscheibe,
(6) Antennenhalterung,
(7) Mutter,
(8) Dichtring,
(9) Dichtring,
(10) Klebstoff,
(11) Antennengehäuse,
(12) Montageplatte
(13) Clips und
(I,II) Scheibe mit Antennenhalterung nach dem Stand der Technik und erfindungsgemäß.

## Patentansprüche

1. Fahrzeugscheibe mit Antennenhalterung umfassend:
a. eine Öffnung (1) in einer Verbundscheibe (2) aus einer äußeren Scheibe (2a), Zwischenschicht (2b) und einer inneren Scheibe (2c), wobei die innere Scheibe (2c) benachbart zur Öffnung (1) eine Aussparung (3) aufweist,
b. ein oberhalb im Bereich um die Öffnung (1) auf der äußeren Scheibe (2a) angeordneter Klebstoff (10), wobei der Klebstoff weiter ausgedehnt ist als die Öffnung der inneren Scheibe (2c), und eine auf dem Klebstoff (10) angeordnete und fixierte Montageplatte (12),
c. ein Antennengehäuse (11) auf der Montageplatte (12), das reversibel abnehmbar auf der Montageplatte (12) angebracht ist, wobei das Antennengehäuse (11) eine stabförmige Antennenhalterung (6) aufweist, die innerhalb der Öffnung (1) sowie innerhalb und/oder unterhalb der Aussparung (2) angeordnet ist, und
d. eine Mutter (7) oder ein Clips (13) an der Antennenhalterung (6) unterhalb oder in der Aussparung (3), welche das Antennengehäuse (11) an der Montageplatte (12) fixiert.

2. Fahrzeugscheibe nach Anspruch 1, wobei unterhalb der Öffnung (1) auf der inneren Scheibe (2c) ein Dichtring (8) und unterhalb des Dichtrings (8) eine Stützscheibe (5) angeordnet ist.

3. Fahrzeugscheibe nach Anspruch 1 oder 2, wobei der Dichtring (8) und die Stützscheibe (5) in der Öffnung (1) innerhalb der Aussparung (3) angeordnet sind.

4. Fahrzeugscheibe nach einem der Ansprüche 1 bis 3, wobei der Klebstoff (10) von einem äußeren Dichtring (9) umgeben ist.

5. Fahrzeugscheibe nach einem der Ansprüche 1 bis 4, wobei die Öffnung (1) einen Durchmesser von 0,2 cm bis 5 cm, bevorzugt von 1 cm bis 2 cm aufweist.

6. Fahrzeugscheibe nach einem der Ansprüche 1 bis 5, wobei die Scheibe (2) Glas, besonders bevorzugt Flachglas, Floatglas, Quarzglas, Borosilikatglas, Kalk-Natron-Glas, oder Polymere, bevorzugt Polyethylen, Polypropylen, Polycarbonat Polymethylmethacrylat und/oder Gemische davon enthält.

7. Fahrzeugscheibe nach einem der Ansprüche 1 bis 6, wobei der Klebstoff (10), Klebstoffe, feuchtigkeitsreaktive Schmelzklebstoffe oder heißhärtenden Klebstoff, bevorzugt Polyurethan-Präpolymere, Polyester, Polyolefine, Polyurethane, Silikone, Polyacrylate, Polyvinylacetate, Polyepoxide und/oder Polyamide sowie Gemische und/oder Copolymere davon, bevorzugt Polyurethane enthält.

8. Fahrzeugscheibe nach einem der Ansprüche 1 bis 7, wobei die Montageplatte (12) und/oder Stützscheibe (5) Metall und/oder Polymere, bevorzugt Eisen, Mangan, Chrom, Nickel, Kobalt, Aluminium, Vanadium, Wolfram, Titan oder Legierungen davon und/oder Polyethylen, Polypropylen, Polystyrol, Polyurethane, Polycarbonate, Polymethylmetacrylate, Polyacrylate, Polyester, Polyamide, Polyethylenterephthalat, Polybutylenterephthalat und/oder Gemische oder Copolymere davon enthält.

9. Fahrzeugscheibe nach einem der Ansprüche 1 bis 8, wobei die Antennenhalterung (6), Clips (13) und/oder Mutter (7) Metall und/oder Polymere, bevorzugt Eisen, Mangan, Chrom, Nickel, Kobalt, Aluminium, Vanadium, Wolfram, Titan oder Legierungen davon und/oder Polyethylen, Polypropylen, Polystyrol, Polyurethane, Polycarbonate, Polymethylmetacrylate, Polyacrylate, Polyester, Polyamide, Polyethylenterephthalat, Polybutylenterephthalat und/oder Gemische oder Copolymere davon enthält.

10. Verfahren zur Herstellung einer Fahrzeugscheibe mit Antennenhalterung wobei:
a. eine Öffnung (1) in einer Verbundscheibe (2) aus einer äußeren Scheibe (2a), Zwischenschicht (2b) und inneren Scheibe (2c) gebohrt und/oder geschnitten wird und die innere Scheibe (2c) mit einer Aussparung (3) versehen wird,
b. ein Klebstoff (10) oberhalb der Öffnung (1) auf der äußeren Scheibe (2) aufgebracht wird, wobei der Klebstoff weiter ausgedehnt ist als die Öffnung der inneren Scheibe (2c),
c. eine Montageplatte (12) auf dem Klebstoff (10) aufgebracht wird,
d. ein Antennengehäuse (11), das eine stabförmige Antennenhalterung (6) aufweist, auf der Montageplatte (12) angebracht wird und die Antennenhalterung (6) durch die Öffnung (1) geführt wird, und
e. das Antennengehäuse (11) über die Antennenhalterung (6) mit einer Mutter (7) oder Clips (13) unterhalb oder in der Aussparung (3) auf der Montageplatte (12) fixiert wird.

11. Verfahren zur Herstellung einer Fahrzeugscheibe mit Antennenhalterung wobei
a. eine Öffnung (1) in eine Verbundscheibe (2) aus einer äußeren Scheibe (2a), Zwischenschicht (2b) und inneren Scheibe (2c) gebohrt und/oder geschnitten wird und die innere Scheibe (2c) mit einer Aussparung (3) versehen wird,
b. ein Klebstoff (10) auf einer Montageplatte (12) aufgebracht wird, wobei der Klebstoff weiter ausgedehnt ist als die Öffnung der inneren Scheibe (2c),
c. die Montageplatte (12) oberhalb der Öffnung (1) auf der äußeren Scheibe (2a) aufgebracht wird,
d. der Klebstoff (10) zwischen die Montageplatte (12) und die äußere Scheibe (2a) gefügt wird,
e. ein Antennengehäuse (11), das eine stabförmige Antennenhalterung (6) aufweist, auf der Montageplatte angebracht wird und die Antennenhalterung (6) durch die Öffnung (1) geführt wird und
f. das Antennengehäuse (11) über die Antennenhalterung (6) mit einer Mutter (7) oder Clips (13) unterhalb oder in der Aussparung (3) auf der Montageplatte (12) fixiert wird.

12. Verfahren nach Anspruch 10 oder 11, wobei der Zwischenraum zwischen der äußeren Stützscheibe (12), dem Klebestreifen (10) und der Verbundscheibe (2) mit einem Dichtring (9) abgeschlossen wird.

13. Verwendung der Fahrzeugscheibe nach einem der Ansprüche 1 bis 9 als Dachscheibe eines Fahrzeuges.

## Claims

1. Vehicle window pane with antenna mount comprising:
a. an opening (1) in a composite pane (2) made of an outer pane (2a), intermediate layer (2b), and an inner pane (2c), wherein the inner pane (2c) has a recess (3) adjacent the opening (1),
b. an adhesive (10) disposed on the outer pane (2a) on the top in the region around the opening (1), wherein the adhesive is more expansive than the opening of the inner pane (2c), and a mounting plate (12) disposed and fixed on the adhesive (10),
c. an antenna housing (11) on the mounting plate (12) which is reversibly detachably fixed on the mounting plate (12), wherein the antenna housing (11) comprises a rod-shaped antenna mount (6) which is disposed within the opening (1) as well as within and/or below the recess (3), and
d. a nut (7) or a clip (13) on the antenna mount (6) below or in the recess (3) which fixes the antenna housing (11) on the mounting plate (12).

2. Vehicle window pane according to claim 1, wherein a sealing ring (8) is disposed below the opening (1) on the inner pane (2c) and a supporting ring (5) is disposed below the sealing ring (8).

3. Vehicle window pane according to claim 1 or 2, wherein the sealing ring (8) and the supporting ring (5) are disposed in the opening (1) within the recess (3).

4. Vehicle window pane according to one of claims 1 through 3, wherein the adhesive (10) is surrounded by an outer sealing ring (9).

5. Vehicle window pane according to one of claims 1 through 4, wherein the opening (1) has a diameter of 0.2 cm to 5 cm, preferably of 1 cm to 2 cm.

6. Vehicle window pane according to one of claims 1 through 5, wherein the pane (2) contains glass, particularly preferably, flat glass, float glass, quartz glass, borosilicate glass, soda-lime glass, or polymers, preferably polyethylene, polypropylene, polycarbonate, polymethyl methacrylate, and/or mixtures thereof.

7. Vehicle window pane according to one of claims 1 through 6, wherein the adhesive (10), contains adhesives, moisture-reactive hot-melt adhesives, or heat-curing adhesive, preferably polyurethane prepolymers, polyesters, polyolefins, polyurethanes, silicones, polyacrylates, polyvinyl acetates, polyepoxides, and/or polyamides, as well as mixtures and/or copolymers thereof, preferably polyurethanes.

8. Vehicle window pane according to one of claims 1 through 7, wherein the mounting plate (12) and/or supporting ring (5) contain metal and/or polymers, preferably iron, manganese, chromium, nickel, cobalt, aluminum, vanadium, tungsten, titanium, or alloys thereof and/or polyethylene, polypropylene, polystyrene, polyurethanes, polycarbonates, polymethyl methacrylates, polyacrylates, polyesters, polyamides, polyethylene terephthalate, polybutylene terephthalate, and/or mixtures or copolymers thereof.

9. Vehicle window pane according to one of claims 1 through 8, wherein the antenna mount (6), clip (13), and/or nut (7) contain metal and/or polymers, preferably iron, manganese, chromium, nickel, cobalt, aluminum, vanadium, tungsten, titanium, or alloys thereof and/or polyethylene, polypropylene, polystyrene, polyurethanes, polycarbonates, polymethyl methacrylates, polyacrylates, polyesters, polyamides, polyethylene terephthalate, polybutylene terephthalate, and/or mixtures or copolymers thereof.

10. Method for producing a vehicle window pane with antenna mount wherein:
a. an opening (1) is drilled and/or cut in a composite pane (2) made of an outer pane (2a), intermediate layer (2b), and inner pane (2c), and the inner pane (2c) is provided with a recess (3),
b. an adhesive (10) is applied above the opening (1) on the outer pane (2), wherein the adhesive is more expansive than the opening of the inner pane (2c),
c. a mounting plate (12) is applied on the adhesive (10),
d. an antenna housing (11) which comprises a rod-shaped an antenna mount (6) is installed on the mounting plate (12), and the antenna mount (6) is guided through the opening (1), and
e. the antenna housing (11) is fixed on the mounting plate (12) via the antenna mount (6) with a nut (7) or clip (13) below or in the recess (3).

11. Method for producing a vehicle window pane with antenna mount, wherein
a. an opening (1) is drilled and/or cut in a composite pane (2) made of an outer pane (2a), intermediate layer (2b), and inner pane (2c), and the inner pane (2c) is provided with a recess (3),
b. an adhesive (10) is applied on a mounting plate (12), wherein the adhesive is more expansive than the opening of the inner pane (2c),
c. the mounting plate (12) is applied above the opening (1) on the outer pane (2a),
d. the adhesive (10) is placed between the mounting plate (12) and the outer pane (2a),
e. an antenna housing (11) which comprises a rod-shaped antenna mount (6) is installed on the mounting plate, and the antenna mount (6) is guided through the opening (1), and
f. the antenna housing (11) is fixed on the mounting plate (12) via the antenna mount (6) with a nut (7) or clip (13) below or in the recess (3).

12. Method according to claim 10 or 11, wherein the intermediate space between the outer supporting ring (12), the adhesive strip (10), and the composite pane (2) is sealed with a sealing ring (9).

13. Use of the motor vehicle window pane according to one of claims 1 through 9 as a roof panel of a motor vehicle.

## Revendications

1. Vitre de véhicule avec support d'antenne comprenant:
a. une ouverture (1) dans une vitre feuilletée (2) composée d'une vitre extérieure (2a), une couche intermédiaire (2b) et une vitre intérieure (2c), où la vitre intérieure (2c) présente un évidement (3) adjacente à l'ouverture (1),
b. un adhésif (10) disposé sur la vitre extérieure (2a) au dessus dans la zone autour de l'ouverture (1), où l'adhésif s'étend plus loin que l'ouverture de la vitre intérieure (2c) et une plaque de montage (12) disposée et fixée sur l'adhésif (10),
c. un boîtier d'antenne (11) sur la plaque de montage (12), qui est monté de façon réversible amovible sur la plaque de montage (12), où le boîtier d'antenne (11) présente un support d'antenne (6) en forme de tige, qui se trouve à l'intérieur de l'ouverture (1) ainsi qu'à l'intérieur de et/ou sous l'évidement (2) et
d. un écrou (7) ou un clips (13) sur le support d'antenne (6) sous ou dans l'évidement (3), qui fixe le boîtier d'antenne (11) sur la plaque de montage (12).

2. Vitre de véhicule selon la revendication 1, où sous l'ouverture (1) sur la vitre intérieure (2c) une bague d'étanchéité (8) et sous la bague d'étanchéité (8) une bague de support (5) est arrangée.

3. Vitre de véhicule selon la revendication 1 ou 2, où la bague d'étanchéité (8) et la bague de support (5) sont disposées dans l'ouverture (1) à l'intérieur de l'évidement (3).

4. Vitre de véhicule selon l'une des revendications 1 à 3 où l'adhésif (10) est entouré par une bague d'étanchéité (9) extérieure.

5. Vitre de véhicule selon l'une des revendications 1 à 4, où l'ouverture (1) présente un diamètre de 0,2 à 5 cm, de préférence de 1 cm à 2 cm.

6. Vitre de véhicule selon l'une des revendications 1 à 5, où la vitre (2) contient du verre, de façon particulièrement préférée du verre plat, du verre flotté, du verre de quartz, du verre borosilicate, du verre sodocalcique ou des polymères, de préférence du polyéthylène, du polypropylène, du polycarbonate, du polyméthacrylate de méthyle et/ou des mélanges contenant ceux-ci.

7. Vitre de véhicule selon l'une des revendications 1 à 6 où l'adhésif (10) contient des colles fusibles réactives à l'humidité ou des colles thermodurcissables, de préférence des prépolymères de polyuréthane, du polyester, des polyoléfines, des polyuréthanes, des silicones, des polyacrylates, des polyacétates de vinyle, des polyépoxides et/ou des polyamides ainsi que des mélanges et/ou des copolymères de ceux-ci, de préférence des polyuréthanes.

8. Vitre de véhicule selon l'une des revendications 1 à 7, où la plaque de montage (12) et/ou la bague de support (5) contiennent du métal et/ou des polymères, de préférence du fer, du manganèse, du chrome, du nickel, du cobalt, de l'aluminium, du vanadium, du tungstène, du titane ou des alliages de ceux-ci et/ou du polyéthylène, du polypropylène, du polystyrène, des polyuréthanes, des polycarbonates, des polyméthacrylates de méthyle, des polyacrylates, du polyester, des polyamides, du polytéréphtalate d'éthylène, du polytéréphtalate de butylène ou des mélanges ou des copolymères de ceux-ci.

9. Vitre de véhicule selon l'une des revendications 1 à 8, où le support d'antenne (6) le clips (13) et/ou l'écrou (7)contiennent du métal et/ou des polymères, de préférence du fer, du manganèse, du chrome, du nickel, du cobalt, de l'aluminium, du vanadium, du tungstène, du titane ou des alliages de ceux-ci et/ou du polyéthylène, du polypropylène, du polystyrène, des polyuréthanes, des polycarbonates, des polyméthacrylates de méthyle, des polyacrylate, du polyester, des polyamides, du polytéréphtalate d'éthylène, du polytéréphtalate de butylène et/ou des mélanges ou des copolymères de ceux-ci).

10. Procédé de fabrication d'une vitre de véhicule avec support d'antenne où:
a. une ouverture (1) est percée et/ou coupée dans une vitre feuilletée (2) composée d'une vitre extérieure (2a), une couche intermédiaire (2b) et une vitre intérieure (2c), et la vitre intérieure (2c) est pourvue d'un évidement (3).
b. un adhésif (10) est appliqué au-dessus de l'ouverture (1) sur vitre extérieure (2) où l'adhésif s'étend plus loin que l'ouverture de la vitre intérieure (2c)),
c. une plaque de montage (12) est appliquée à l'adhésif (19),
d. un boîtier d'antenne (11), qui présente un support d'antenne (6) en forme de tige, est appliqué à la plaque de montage (12) et le support d'antenne (6) est conduit à travers l'ouverture (1), et
e. le boîtier de l'antenne (11) est fixé sur la plaque de montage (12) par le biais du support d'antenne (6) avec un écrou (7) ou un clips (13) en dessous ou dans l'évidement (3).

11. Procédé de fabrication d'une vitre de véhicule avec support d'antenne où:
a. une ouverture (1) est percée et/ou coupée dans une vitre feuilletée (2) composée d'une vitre extérieure (2a), une couche intermédiaire (2b) et une vitre intérieure (2c), et la vitre intérieure (2c) est pourvue d'un évidemment (3).
b. un adhésif (10) est appliqué au-dessus de l'ouverture (1) sur vitre extérieure (2) où l'adhésif s'étend plus loin que l'ouverture de la vitre intérieure (2c)),
c. la plaque de montage (12) est installée au dessus de l'ouverture (1) sur la vitre extérieure (2a),
d. l'adhésif (10) est ajouté entre la plaque de montage (12) et la vitre extérieure (2a),
e. un boîtier d'antenne (11), qui présente un support d'antenne (6) en forme de tige, est appliqué à la plaque de montage (12) et le support d'antenne (6) est conduit à travers l'ouverture (1), et
f. le boîtier de l'antenne (11) est fixé sur la plaque de montage (12) par le support d'antenne (6) avec un écrou (7) ou un clips (13) en dessous de ou dans l'évidement (3).

12. Procédé selon la revendication 10 ou 11, où l'espace entre la vitre de support extérieure (12), la bande adhésive (10) et la vitre feuilletée (2) est fermée avec une bague d'étanchéité (9).

13. Utilisation de la vitre de véhicule selon l'une des revendications 1 à 9 comme vitre de toit d'un véhicule.
